# EUROPÄISCHE PATENTANMELDUNG

(11) **EP 4 094 841 A1**
(43) Veröffentlichungstag der Anmeldung: **30.11.2022**
(21) Anmeldenummer: 22174798.3
(22) Anmeldetag: 23.05.2022
(51) Int. Cl.: B05B 3/10, A63B 22/06, G09B 23/12, B44D 3/22, G09B 11/10

(54) **SCHLEUDERBILDVORRICHTUNG**

(30) Priorität: 25.05.2021 DE 202021102837 U
(71) Anmelder: Cseh, Georg, 02625 Bautzen (DE)
(72) Erfinder: Cseh, Georg, 02625 Bautzen (DE)
(74) Vertreter: Patent- und Rechtsanwälte Behrmann Wagner PartG mbB

(57) **Zusammenfassung**

Die Erfindung betrifft eine Schleuderbildvorrichtung gekennzeichnet durch einen rotatorisch antreibbaren Schleuderteller (02) zur Aufnahme eines Farbträgers, eine, bevorzugt fußbetriebene, Antriebseinrichtung (03) und eine den Schleuderteller (02) mit der Antriebseinrichtung (03) verbindende Übersetzungs- und/oder Getriebeanordnung (04) zur Erzeugung einer Rotationsbewegung des Schleudertellers (02) mittels der von der Antriebseinrichtung (03) erzeugbaren Antriebsenergie.

## Beschreibung

Die vorliegende Erfindung betrifft eine Schleuderbildvorrichtung nach dem Anspruch 1.

Im Bereich der bildenden Künste sind Schleuderbilder grundsätzlich bekannt. Zur Herstellung von Schleuderbildern wird Farbe oder ein sonstiges pigmenthaltiges Mittel auf einen Farbträger, beispielsweise eine Leinwand, aufgetragen. Der Farbträger wird dann, beispielsweise durch händisches Schleudern des Farbträgers in Rotation versetzt, um unter Ausnutzung der Zentrifugal- bzw. Zentripetalkraft auf die Farbe während des Schleuderns die Farbe über den Farbträger zu verteilen und so ein Bild zu erzeugen.

Damit ist die Erzeugung eines Schleuderbilds eine sehr anschauliche und gute nachvollziehbare Verkörperung eines physikalischen Grundprinzips, nämlich der Trägheit oder des Konzepts der Zentrifugal- bzw. Zentripetalkräfte.

Im pädagogischen Umfeld hat es sich als besonders effektiv erwiesen, pädagogische Inhalte fächerübergreifend zu vermitteln. Weiterhin ist es bekannt, dass durch persönliches Erfahren und Erleben abstrakte, insbesondere naturwissenschaftliche Konzepte und Konstrukte besser vermittelbar werden.

Die Aufgabe der vorliegenden Erfindung ist es basierend darauf eine Vorrichtung vorzuschlagen, die auch für ungeübte Benutzer die Möglichkeit zur Erfahrung des Zentrifugal- oder Zentripetalprinzips anhand der Erstellung eines Schleuderbilds erfahrbar und nachvollziehbar zu machen.

Diese Aufgabe wird mit einer Schleuderbildvorrichtung gemäß des Anspruchs 1 gelöst. Vorteilhafte Ausführungsformen sind Gegenstand der nachfolgenden Beschreibung, Figurenbeschreibung sowie der Unteransprüche.

Erfindungsgemäß umfasst die Schleuderbildvorrichtung einen rotatorisch antreibbaren Schleuderteller zur Aufnahme eines Farbträgers, eine, bevorzugt fußbetriebene Antriebseinrichtung und eine den Schleuderteller mit der Antriebseinrichtung verbindende Übersetzungs- und/oder Getriebeanordnung zur Erzeugung einer Rotationsbewegung des Schleudertellers mittels der von der Antriebseinrichtung erzeugbaren Antriebsenergie.

Die erfindungsgemäße Vorrichtung hat erkannt, dass in leichter und gut reproduzierbarer Art und Weise für jedermann und damit gerade auch für ungeübte Benutzer/"Künstler" Schleuderbilder hergestellt werden können, indem über die, bevorzugt fußbetriebene, Antriebseinrichtung und die damit verbundene Übersetzung- und/oder Getriebeanordnung eine Antriebsenergie aufseiten des Schleudertellers in eine Rotationsbewegung umgewandelt wird, wobei der Schleuderteller zur Aufnahme oder zur Befestigung des Farbträgers genutzt wird, sodass dann nach dem Bereitstellen eines Farbträgers sowie der darauf angeordneten Farbe ein Benutzer lediglich die Antriebseinrichtung antreiben oder bedienen muss und dabei oder dadurch das Schleuderbild erzeugt.

Im Rahmen dieses Vorgangs wird in einer Art fächerübergreifenden oder interdisziplinärer Wissensvermittlung nicht nur Kenntnisse und Fähigkeiten der bildenden Künste geschult, sondern darüber hinaus auch in sehr eindrücklicher und nachvollziehbarer Weise das physikalische Konzept von Zentrifugalkraft und Zentripetalkraft vermittelt. Darüber hinaus wird auf Grund der mechanischen Übermittlung und Übertragung der Schleuderkräfte auf den Farbträger keine Erfahrung oder besonderes Geschick zur Erzeugung des Schleuderbildes benötigt.

Gemäß einer ersten, besonders vorteilhaften Ausführungsform der Vorrichtung kann vorgesehen sein, dass diese einen Sitz zur sitzenden Betätigung der Antriebseinrichtung durch den Benutzer umfasst. Dadurch wird ermöglicht, dass der Benutzer bequem und in einer vertrauten Weise - die Kombination aus fußbetriebener Antriebseinrichtung und Sitz kann bevorzugt nach dem Vorbild eines Fahrradkonstruktion ausgeführt sein - die Vorrichtung benutzen und dabei effektiv die notwendige Antriebsenergie zur Betätigung der Antriebseinrichtung aufbringen oder bereitstellen.

Vorteilhaft weiterbildend kann die Schleuderbildvorrichtung weiter auch eine Haltevorrichtung umfassen, an der ein Benutzer sich während der Benutzung, bevorzugt mit den Händen festhalten und/oder abstützten kann. Auch die Halteeinrichtung ermöglicht eine sichere Bedienung der Vorrichtung sowie eine effektive und einfache Zurverfügungstellung der Antriebsenergie. Auch die Haltevorrichtung kann mit Bezug auf die Antriebseinrichtung und/oder den Sitz nach dem Vorbild eines Fahrrads oder einer Fahrradkonstruktion ausgebildet sein, wobei die Halteeinrichtung dann einem, bevorzugt festgelegten, Lenker entsprechen kann.

Gemäß einer weiteren, besonders bevorzugten Ausführungsform der Schleuderbildvorrichtung kann vorgesehen sein, dass die Antriebseinrichtung und/oder der Sitz und/oder die Haltevorrichtung an einem Rahmen festgelegt oder mit einem Rahmen verbunden sind. Dies erhöht einerseits die mechanische Stabilität der Vorrichtung. Andererseits erlaubt die Verwendung eines gemeinsamen Rahmens auch die Verwendung oder sogar Wiederverwendung von Zweirad- oder Fahrradkomponenten, Bauteilen oder Baugruppen für die Ausbildung der Antriebseinrichtung, des Sitzes und/oder der Haltevorrichtung.

Gemäß einer weiteren, besonders bevorzugten Variante der erfindungsgemäßen Schleuderbildvorrichtung kann es vorgesehen sein, dass der Schleuderteller im Wesentlichen in einer horizontalen Ebene angeordnet ist und um eine im Wesentlichen vertikal verlaufende Rotationsachse angetrieben wird. Durch diese Anordnung des Schleudertellers wird ermöglicht, dass insbesondere vor und nach der Benutzung der Vorrichtung die Farbe auf dem Farbträger - neben der Gewichtskraft - keiner wesentlichen Kraft- oder Beschleunigungswirkung ausgesetzt ist. Somit kann die Schleuderbildvorrichtung ohne Zeitdruck vorbereitet werden, indem der Farbträger auf den Schleuderteller aufgebracht wird und dort mit Farbe bestückt wird. Alternativ kann bereits ein mit Farbe bestückter Farbträger auf dem Schleuderteller abgelegt werden.

Weiterhin kann gemäß einer besonders vorteilhaften Ausgestaltung der Schleuderbildvorrichtung vorgesehen sein, dass der Schleuderteller so bezüglich der Antriebseinrichtung oder dem Rahmen angeordnet ist, dass der Schleuderteller und/oder ein darauf befindlicher Farbträger während der Benutzung für den Benutzer sichtbar oder einsehbar ist/sind. Dadurch wird ermöglicht, dass der Benutzer während der Benutzung der Schleuderbildvorrichtung bereits einen Eindruck über die Beschleunigung und den daraus resultierenden Verlauf der Farbe auf dem Farbträger erlangt. Somit kann unmittelbar und in eindrücklicher Weise die Wirkung der Zentrifugal- bzw. Zentripetalkraft erfahren werden und gleichzeitig ein Werk der bildenden Kunst, nämlich ein Schleuderbild hergestellt werden.

Weiterhin besonders vorteilhaft kann vorgesehen sein, dass der Schleuderteller auch so angeordnet ist, dass um die Vorrichtung herum positionierte Betrachter den Farbträger sehen können. Bevorzugt ist, gerade die Höhe des Schleudertellers - über einem Untergrund oder Boden - so bemessen, dass umstehende Personen in einem Umkreis von 1 bis 2 Metern den Schleuderteller gut sehen können. Weiterbildend kann die Höhe so gewählt sein, dass auch ein Farbauftrag auf den Farbträger von Personen in der Umgebung des Schleudertellers vorgenommen werden kann.

Eine besonders vorteilhafte Ausgestaltung der Schleuderbildvorrichtung kann vorsehen, dass die Übersetzungs- und/oder Getriebeanordnung einen Keilriemen, bevorzugt mit einer Riemenspanneinrichtung, umfasst. Dadurch kann in einfacher Weise die Antriebsenergie, beispielsweise bereitgestellt über eine fußbetriebene Kurbeleinheit mit Pedalen übertragen werden und gegebenenfalls nach entsprechender Umlenkung, Umrichtung und/oder Übersetzung/Untersetzung an eine Rotationsachse oder Rotationswelle des Schleudertellers übertragen werden. Außerdem sind derartige Keilriemenantriebe robust und wenig verschleißanfällig.

Weiterhin kann vorteilhaft vorgesehen sein, dass die Schleuderbildvorrichtung zumindest abschnittsweise in Umfangsrichtung um den Schleuderteller eine Spritzschutzeinrichtung umfasst. Damit kann u.a. erreicht werden, dass die auf den Farbträger beschleunigte Farbe den Benutzer und die Umgebung der Schleuderbildvorrichtung nicht verunreinigt. Besonders bevorzugt kann auch vorgesehen sein, dass die Spritzschutzeinrichtung als radiale Befestigung oder Begrenzung des Farbträgers dient. In diesem Fall kann auf eine Befestigung des Farbträgers an dem Schleuderteller gegebenenfalls verzichtet werden. Die Rotationsenergie des Schleudertellers wird dann lediglich aufgrund der Gewichtskraft und des resultierenden Kraftschlusses zwischen Schleuderteller und Farbträger auf letzteren übertragen. Die Spritzschutzeinrichtung kann dann sicherstellen, dass, beispielsweise bei einem leicht exzentrisch angeordneten Farbträger, dieser durch die Rotationsbewegung nicht vom Schleuderteller befördert wird.

Nachfolgend werden Einzelheiten, technische Aspekte und vorteilhafte Ausführungsformen der Erfindung anhand der lediglich schematischen Zeichnung beschrieben. Darin zeigt:

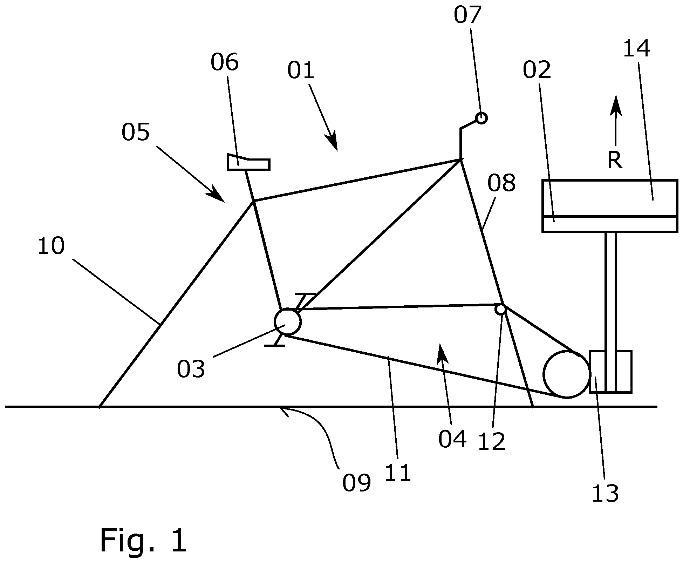

- Fig. 1:: eine schematische Darstellung einer erfindungsgemäßen Schleuderbildvorrichtung

Die Figur 1 zeigt eine Schleuderbildvorrichtung 01 gemäß einer vorteilhaften Ausführungsform. Die Schleuderbildvorrichtung umfasst einen rotatorisch antreibbaren Schleuderteller 02 zur Aufnahme eines Farbträgers. Weiter umfasst die Schleuderbildvorrichtung 01 eine fußbetriebene Antriebseinrichtung 03 und eine den Schleuderteller 02 mit der Antriebseinrichtung 03 verbindende Übersetzungs- und/oder Getriebeanordnung 04 zur Erzeugung einer Rotationsbewegung des Schleudertellers 02 um eine Rotationsachse R mittels der von der Antriebseinrichtung 03 erzeugten Antriebsenergie.

Die Antriebseinrichtung 03 ist dabei in einen Rahmen 05 integriert, der neben der Antriebseinrichtung 03 auch einen Sitz 06 sowie eine Haltevorrichtung 07 in die Schleuderbildvorrichtung 01 einbezieht. Dies bedeutet, dass Sitz 06 und Haltevorrichtung 07 an dem Rahmen 05 festgelegt sind oder mit dem Rahmen verbunden sind. Der Rahmen 05 kann, wie die beispielhafte Darstellung der Fig. 1 zeigt oder zumindest andeutet, nach den Grundzügen eines Zweiradrahmens, insbesondere eines Fahrradrahmens aufgebaut sein. Besonders vorteilhaft kann sogar vorgesehen sein, dass der Rahmen 05 unter Weiterverwendung oder Wiederverwendung eines Zweiradrahmens oder Fahrradrahmens ausgebildet wird.

Dazu kann beispielsweise eine Vordergabel 08 in ihrer Rotation gehemmt und bis auf einen Untergrund 09 verlängert sein. Auch die Hintergabel 10 kann zur Abstützung auf dem Untergrund 09 eine Verlängerung erfahren, sofern ein Fahrrad- oder Zweiradrahmen den Ausgangspunkt des Rahmens 05 bildet.

Wie in der Darstellung der Figur 1 zu erkennen, ist der Schleuderteller 02 im Wesentlichen in einer horizontalen Ebene angeordnet und um eine im Wesentlichen vertikal verlaufende Rotationsachse R antreibbar. Außerdem ist der Schleuderteller 02 so bzgl. der Antriebseinrichtung 03 oder dem Rahmen 05 angeordnet, dass der Schleuderteller 02 und/oder ein darauf befindlicher Farbträger (in Figur 1 nicht explizit dargestellt) während der Benutzung für einen Benutzer sichtbar oder einsehbar ist. Dies ist im Beispiel der Figur 1 dadurch realisiert, dass der Schleuderteller 02 vor dem Rahmen 05 und auch vor der Haltevorrichtung 07 auf einer Höhe gegenüber dem Untergrund 09 angeordnet ist, die über der Antriebseinrichtung 03 aber unterhalb oder zumindest auf gleicher Höhe wie die Haltevorrichtung 07 und/oder der Sitz 06 gewählt ist. Bei dieser Anordnung kann ein Benutzer, wenn er mit dem Gesäß auf den Sitz 06 sitzt und mit den Beinen bzw. Füßen die Antriebseinrichtung 03 betätigt und sich dabei mit wenigstens einer Hand an der Haltevorrichtung 07 festhält sein Blickfeld ohne Probleme auf einen auf dem Schleuderteller 02 angeordneten Farbträger richten.

Die Figur 1 zeigt zudem, dass die Übersetzungs- und/oder Getriebeanordnung 04 einen Keilriemen 11 aufweist, der über eine Riemenspanneinrichtung 12 gespannt ist oder in seiner Spannung anpassbar ist. Der Keilriemen überträgt die Rotation der Antriebseinrichtung 03 auf eine Getriebeeinheit 13, die eine Übersetzung/Untersetzung und Umlenkung der Rotation vornimmt, sodass die Rotationsachse R des Schleudertellers 02 in Rotation versetzt wird. Die Riemenspanneinrichtung 12 kann bevorzugt an einer vorderen Strebe des Rahmens 05, besonders bevorzugt an einer ehemaligen Vordergabel 08 oder einer Verlängerung einer ehemaligen Vordergabel 08 angeordnet sein.

Weiterhin kann vorteilhaft vorgesehen sein, dass der Schleuderteller 02 in Umfangsrichtung zumindest abschnittsweise von der Spritzschutzeinrichtung 14 umgeben ist.

### Bezugszeichenliste

- 01: Schleuderbildvorrichtung
- 02: Schleuderteller
- 03: Antriebseinrichtung
- 04: Übersetzungs- und/oder Getriebeanordnung
- 05: Rahmen
- 06: Sitz
- 07: Haltevorrichtung
- 08: Vordergabel
- 09: Untergrund
- 10: Hintergabel
- 11: Keilriemen
- 12: Riemenspanneinrichtung
- 13: Getriebeeinheit
- 14: Spritzschutzeinrichtung
- R: Rotationsachse

## Patentansprüche

1. Schleuderbildvorrichtung
**gekennzeichnet durch**
einen rotatorisch antreibbaren Schleuderteller (02) zur Aufnahme eines Farbträgers, eine, bevorzugt fußbetriebene, Antriebseinrichtung (03) und eine den Schleuderteller (02) mit der Antriebseinrichtung (03) verbindende Übersetzungs- und/oder Getriebeanordnung (04) zur Erzeugung einer Rotationsbewegung des Schleudertellers (02) mittels der von der Antriebseinrichtung (03) erzeugbaren Antriebsenergie.

2. Schleuderbildvorrichtung nach Anspruch 1,
**gekennzeichnet durch**
einen Sitz (06) zur sitzenden Betätigung der Antriebseinrichtung (03) **durch** einen Benutzer.

3. Schleuderbildvorrichtung nach Anspruch 1 oder 2,
**gekennzeichnet durch**
eine Haltevorrichtung (07) an der ein Benutzer sich während der Benutzung, bevorzugt mit den Händen festhalten und/oder abstützen kann.

4. Schleuderbildvorrichtung nach einem der Ansprüche 2 oder 3, **dadurch gekennzeichnet,**
**dass** die Antriebseinrichtung (03) und/oder der Sitz und/oder die Haltevorrichtung an einem Rahmen (05) festgelegt oder mit einem Rahmen verbunden sind.

5. Schleuderbildvorrichtung nach einem der Ansprüche 1 bis 4,
**dadurch gekennzeichnet,**
**dass** der Schleuderteller (02) im Wesentlichen in einer Horizontalen Ebene angeordnet ist und um eine im Wesentlichen vertikal verlaufende Rotationsachse (R) angetrieben wird.

6. Schleuderbildvorrichtung nach einem der Ansprüche 1 bis 5,
**dadurch gekennzeichnet,**
**dass** der Schleuderteller (02) so bezüglich der Antriebseinrichtung (03) oder dem Rahmen (05) angeordnet ist, dass der Schleuderteller (02) und/oder ein darauf befindlicher Farbträger während der Benutzung für den Benutzer sichtbar oder einsehbar ist/sind.

7. Schleuderbildvorrichtung nach einem der Ansprüche 1 bis 6,
**dadurch gekennzeichnet,**
**dass** die Übersetzungs- und/oder Getriebeanordnung (04) einen Keilriemen (11), bevorzugt mit einer Riemenspanneinrichtung (12), umfasst.

8. Schleuderbildvorrichtung nach einem der Ansprüche 1 bis 7,
**dadurch gekennzeichnet,**
**dass** der Schleuderteller (02) in Umfangsrichtung zumindest abschnittsweise von einer Spritzschutzeinrichtung (14) umgeben ist.
